# EUROPÄISCHE PATENTANMELDUNG

(11) **EP 1 247 700 A2**
(43) Veröffentlichungstag der Anmeldung: **09.10.2002**
(21) Anmeldenummer: 02005095.1
(22) Anmeldetag: 07.03.2002
(51) Int. Cl.: B60R 21/08

(54) **Kraftfahrzeug mit wenigstens einem Schutzrollo**

(30) Priorität: 03.04.2001 DE 10116487
(71) Anmelder: Bayerische Motoren Werke Aktiengesellschaft, 80809 München (DE)
(72) Erfinder: Stöckl, Siegfried, 84076 Pfeffenhausen (DE); Ahmed, Faris, 82211 Herrsching (DE)

(57) **Zusammenfassung**

Es ist Fahrzeugsitz mit einer Rückenlehne bekannt, die an ihrem oberen Randbereich einen Hohlraum aufweist, in dem eine Wickelwelle eines Schutzrollos gelagert ist. Die Rollobahn des Schutzrollos ist aus einer um die Wickelwelle aufgerollten Aufbewahrungslage in eine zumindest annähernd lotrecht verlaufende Wirkstellung verlagerbar, in der sich ein freies Ende der Rollobahn in einem lösbaren Eingriff mit einer Befestigungseinrichtung an oder in einer Dachinnenverkleidung befindet. Aufgabe der Erfindung ist es, einen Fahrzeugladeraum, insbesondere bei umgeklappten Rückenlehnen von Fondsitzen, gegenüber dem Fahrgastraum abzugrenzen.

Dazu dient ein Schutzrollo, dessen Wickelwelle (**9**) unmittelbar unterhalb des vorderen Abschnitts eines Sitzkissens (**2**) eines Fahrzeugsitzes (**1**) oder in dem vorderen Abschnitt des Sitzkissens (**2**) integriert gelagert ist. Dies ist eine raumsparende und optisch ansprechende Unterbringung des Schutzrollos, da dieser Raum anderweitig nicht genutzt wird und nicht im unmittelbaren Blickfeld eines Passagiers liegt, sondern zumindest größtenteils durch das Sitzkissen (**2**) verdeckt wird.

## Beschreibung

Die Erfindung betrifft ein Kraftfahrzeug mit wenigstens einem Schutzrollo nach dem Oberbegriff des Patentanspruchs 1 oder 5.

Aus der DE 39 09 397 A1 ist ein Fahrzeugsitz mit einer Rückenlehne bekannt, die an ihrem oberen Randbereich mit einem Hohlraum versehen ist. In diesem ist eine Lagerwelle drehbar gelagert, auf der ein Netz befestigt ist, das mit seinem freien Endbereich durch einen Längsschlitz in der Rückenlehne geführt ist. Dabei ist am Endbereich des Netzes eine Befestigungsstange angebracht, die bei vollständig abgewickeltem Netz an der Dachinnenverkleidung über Aufnahmehaken lösbar befestigt ist.

Aufgabe der Erfindung ist es, einen Fahrzeugladeraum, insbesondere bei umgeklappten Rückenlehnen von Fondsitzen, gegenüber dem Fahrgastraum abzugrenzen.

Diese Aufgabe wird durch die Merkmale des Patentanspruchs 1 und / oder 5 gelöst.

Ein Kraftfahrzeug weist wenigstens ein Schutzrollo auf, dessen Rollobahn aus einer um eine drehbare Wickelwelle aufgerollten Aufbewahrungslage in eine zumindest annähernd lotrecht verlaufende Wirkstellung verlagerbar ist. In der Wirkstellung befindet sich ein freies Ende der Rollobahn in einem lösbaren Eingriff mit einer Befestigungseinrichtung an oder in einer Dachinnenverkleidung. Kerngedanke der Erfindung ist es, dass die Wickelwelle unmittelbar unterhalb des vorderen Abschnitts eines Sitzkissens eines Fahrzeugsitzes oder in dem vorderen Abschnitt des Sitzkissens integriert gelagert ist. Dies ist eine raumsparende und optisch ansprechende Unterbringung des Schutzrollos, da dieser Raum anderweitig nicht genutzt wird und nicht im unmittelbaren Blickfeld eines Passagiers liegt, sondern zumindest größtenteils durch das Sitzkissen verdeckt wird. In der Wirkstellung grenzt das Schutzrollo bei einer umgeklappten Rückenlehne den Laderaum ab, sodass lose Ladegüter beim Abbremsen des Fahrzeugs nicht nach vorne geschleudert werden können.

Vorteilhafterweise wird die Rollobahn über mindestens eine Umlenkrolle geführt, die im Bereich einer in Fahrtrichtung gesehen vorderen Stirnseite des Sitzkissens angeordnet ist. Das Schutzrollo ist optisch am unauffälligsten untergebracht, wenn die Rollobahn aus einer in Fahrtrichtung gesehen vorderen Stirnseite des Sitzkissens durch einen Längsschlitz nach vorne herausgeführt wird. Damit beim Herausziehen der Rollobahn nach oben zur Dachinnenverkleidung hin die Rollobahn nicht an einer Kante zwischen dem Längsschlitz und der Stirnseite entlang schleifen muss, ist mindestens eine Umlenkrolle vorgesehen. Dadurch wird der Verschleiß der Rollobahn und des Sitzkissens gering gehalten und das Schutzrollo lässt sich mühelos benutzen.

An dem freien Ende der Rollobahn ist günstigerweise ein starrer Zugspriegel angebracht. Dieser Zugspriegel ermöglicht es, dass das Schutzrollo bequem abgerollt werden kann. Diese bequeme Handhabung kann durch einen am Zugspriegel befestigten Handgriff noch erhöht werden. Desweiteren kann der Zugspriegel bei abgewickelter Rollobahn an mindestens einem in der Dachinnenverkleidung vorgesehenen Aufnahmehaken eingehängt werden. Dies ist eine einfache, mögliche Befestigungseinrichtung, die jederzeit wieder gelöst werden kann.

Wenn dieser Eingriff des Zugspriegels in einen Aufnahmehaken wieder gelöst wird, rollt sich idealerweise die Rollobahn selbsttätig wieder auf die Wickelwelle auf. Dies erfolgt beispielsweise durch eine lange, in die Wickelwelle integrierte Spiralfeder, die die Rollobahn vorspannt.

Durch die bisher beschriebene Anordnung kann der Fahrzeugsitz nicht von einem Passagier genutzt werden, wenn das Schutzrollo sich in der Wirkstellung befindet. Um den Fahrzeugsitz nutzen und dennoch den Laderaum abgrenzen zu können, ist idealerweise ein weiterer Schutzrollo vorgesehen, dessen Rollobahn aus einer um eine drehbare Wickelwelle aufgerollten Aufbewahrungslage in eine zumindest annähernd lotrecht verlaufende Wirkstellung zwischen einer sich in Gebrauchsstellung befindenden Rückenlehne des Fahrzeugsitzes und der Dachinnenverkleidung verlagerbar ist. Die Wickelwelle des weiteren Schutzrollos ist vorteilhafterweise oberhalb oder in der Dachinnenverkleidung gelagert. Dadurch ist das Schutzrollo in der Aufbewahrungslage in keinster Weise hinderlich untergebracht und es ist kein separates Gehäuse dafür erforderlich. Dies spart Materialkosten und Gewicht. Das freie Ende der Rollobahn des weiteren Schutzrollos kann sich in der Wirkstellung in einem lösbaren Eingriff mit einer Befestigungseinrichtung im oberen Bereich der Rückseite der Rückenlehne des Fahrzeugsitzes befinden.

Es ist zwar aus der EP 0 787 627 B1 ein Schutzrollo mit zwei freien Enden bekannt, das oberhalb der Dachinnenverkleidung angeordnet ist, so dass entweder das eine freie Ende etwa lotrecht zur Vorderkante eines Sitzkissens eines Fahrzeugsitzes heruntergezogen und dort eingehängt werden kann, oder das andere freie Ende etwa lotrecht zum oberen Ende der Rückseite des Fahrzeugsitzes heruntergezogen und dort eingehängt werden kann. Allerdings ist diese Anordnung sehr aufwendig und damit für einen Serieneinsatz zu teuer. Des weiteren muss bei dieser Lösung nachteiligerweise die Dachinnenverkleidung auch im Kopfbereich von Fondpassagieren relativ tief angebracht werden, um genügend Bauraum für den Schutzrollo zu haben. Eine zusätzliche Anbringung eines Schiebedachsystems ist nicht möglich.

Zwei erfindungsgemäß voneinander unabhängige Schutzrollos mit jeweils einer eigenen Wickelwelle dagegen weisen all diese Nachteile nicht auf. Jeder einzelne Rollo ist in bewährter Art einfach aufgebaut. Die Dachinnenverkleidung muss nur für den weiteren Schutzrollo hinter dem Kopfbereich von Fondpassagieren tiefer angebracht werden.

Eine Rollobahn kann günstigerweise aus einem Gewirke bestehen, das in regelmäßigen Abständen Löcher hat. Aufgrund der Löcher ist der Blick nach hinten durch ein derartiges Schutzrollo in der Wirkstellung für den Fahrer zumindest nicht völlig verwehrt. Alternativ dazu ist auch ein Netz als Rollobahn gut geeignet. Ein Netz ermöglicht einen fast ungehinderten Blick nach hinten, und bietet dennoch den erforderlichen Schutz.

Weitere vorteilhafte Ausgestaltungen sind Gegenstand von Unteransprüchen.

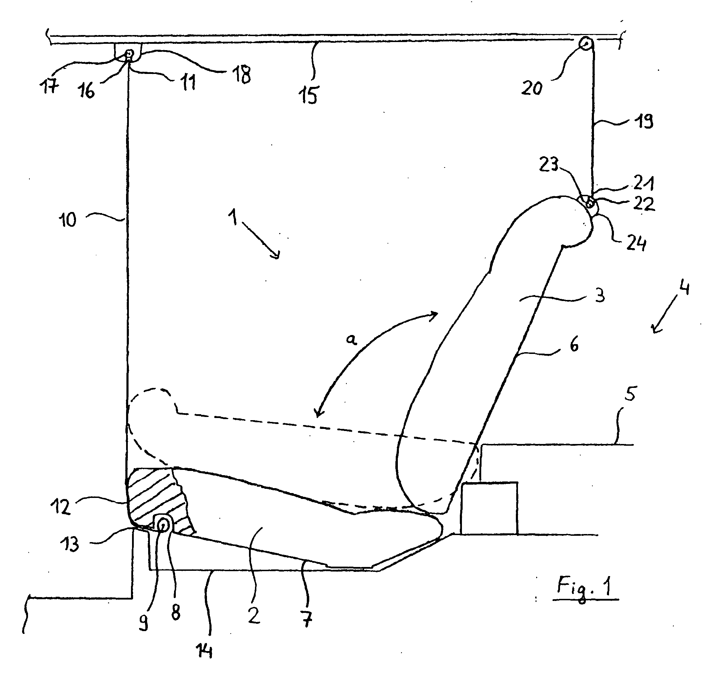

In der Zeichnung ist ein mögliches Ausführungsbeispiel der Erfindung dargestellt, das im folgenden näher beschrieben wird. Die einzige Figur zeigt in schematischer Darstellungsweise eine Seitenansicht eines Fondsitzes eines Kraftfahrzeuges mit einem Schutzrollo.

Es ist eine Rücksitzbank 1 in einem Kombifahrzeug dargestellt. Die Rücksitzbank 1 besteht aus einem Sitzkissen 2 und einer Rückenlehne 3, die in den Richtungen des Doppelpfeils a schwenkbar gelagert ist. Dabei schließt sich an die Rückenlehne 3 ein Laderaum 4 an, dessen Laderaumboden 5 an die Rückenlehne 3 in der mit durchgezogenen Linien dargestellten, hochgeschwenkten Lage angrenzt. In der mit unterbrochenen Strichen dargestellten, niedergeschwenkten Lage der Rückenlehne 3 bildet dagegen die Rückwand 6 mit dem Laderaumboden 5 eine annähernd ebene Fläche.

Das Sitzkissen 2 weist auf der Unterseite 7 im vorderen Bereich eine längliche Aussparung 8 in Fahrzeugquerrichtung über nahezu die ganze Breite auf. In der Aussparung 8 ist eine sich über die ganze Breite erstreckende Wickelwelle 9 eines Schutzrollos vorgesehen, die in Lagerungen drehbar gelagert ist, die im Bereich der Seiten der Aussparung 8 angeordnet sind. Auf der Wickelwelle 9 ist eine sich nahezu über die Breite des Sitzkissens 2 erstreckende Rollobahn 10 auf- und abrollbar befestigt, die mit ihrem freien Endabschnitt 11 durch einen von der Aussparung 8 zur vorderen Außenseite 12 des Sitzkissens 2 verlaufenden Längsschlitz 13 geführt ist. Dieser Längsschlitz 13 wird durch die Unterseite 7 des Sitzkissens 2 einerseits und die das Sitzkissen 2 aufnehmende Karosseriestruktur 14 andererseits gebildet. In der dargestellten Wirkstellung des Schutzrollos verläuft die Rollobahn 10 etwa lotrecht zur Dachinnenverkleidung 15.

Am freien Endabschnitt 11 der Rollobahn 10 ist ein starrer Zugspriegel 16 angebracht. An den seitlichen Endabschnitten des Zugspriegels 16 ist jeweils ein als Ringflansch gestaltetes Halteteil 17 angebracht, über das der Zugspriegel 16 bei abgewickelter Rollobahn 10 jeweils in einen an der Dachinnenverkleidung 15 angebrachten Aufnahmehaken 18 eingehängt wird.

Zum Aufwickeln der Rollobahn 10 auf die Wickelwelle 9 in eine Aufbewahrungsstellung wird der Zugspriegel 16 aus den Aufnahmehaken 18 herausgenommen, wodurch die Rollobahn 10 aufgerollt werden kann. Dies kann selbsttätig durch mindestens eine in der Aussparung 8 des Sitzkissens 2 angeordnete, nicht dargestellte Spiralfeder erfolgen, die mit einem Endabschnitt mit der Wickelwelle 9, mit ihrem anderen Endabschnitt dagegen mit dem Sitzkissen 2 verbunden ist. Der Zugspriegel 16 ist zusammen mit den seitlichen Halteteilen 17 so groß, dass er nicht durch den Längsschlitz 13 passt, und so in der Aufbewahrungsstellung des Schutzrollos gut greifbar außen am Längsschlitz 10 anliegt.

Die bisher beschriebene Anordnung eines Schutzrollos trennt in der Wirkstellung den Laderaum 4 vom Fahrgastraum ab. Allerdings ist der Fahrzeugsitz 1 für Passagiere dann nicht mehr nutzbar. Damit bei Bedarf der Fahrzeugsitz 1 genutzt werden kann, und trotzdem der Laderraum 4 vom Fahrgastraum abtrennbar ist, ist ein zweites Schutzrollo vorgesehen, das genauso wie das erste aufgebaut ist. Eine Wickelwelle 20 des zweiten Schutzrollos ist in der Dachinnenverkleidung 15 gelagert. Die Rollobahn 19 des zweiten Schutzrollos erstreckt sich in der abgebildeten Wirkstellung etwa lotrecht von der Wickelwelle 20 bis zum oberen Bereich der Rückseite 6 der Rückenlehne 3 des Fahrzeugsitzes 1. Am freien Ende 21 der Rollobahn 19 ist ein Zugspriegel 22 mit Halteteilen 23 angebracht. Der Zugspriegel 22 ist mit den Halteteilen 23 in Aufnahmehaken 24 im oberen Bereich der Rückseite 6 der Rückenlehne 3 lösbar eingehängt.

Zum Aufwickeln der Rollobahn 19 auf die Wickelwelle 20 in eine Aufbewahrungsstellung wird der Zugspriegel 22 mit den Halteteilen 23 aus den Aufnahmehaken 24 ausgehängt, wodurch die Rollobahn 19 aufgerollt werden kann.

## Patentansprüche

1. Kraftfahrzeug mit wenigstens einem Schutzrollo, dessen Rollobahn aus einer um eine drehbare Wickelwelle aufgerollten Aufbewahrungslage in eine zumindest annähernd lotrecht verlaufende Wirkstellung verlagerbar ist, in der sich ein freies Ende der Rollobahn in einem lösbaren Eingriff mit einer Befestigungseinrichtung an oder in einer Dachinnenverkleidung befindet, **dadurch gekennzeichnet, dass** die Wickelwelle **(9)** unmittelbar unterhalb des vorderen Abschnitts eines Sitzkissens **(2)** eines Fahrzeugsitzes **(1)** oder in dem vorderen Abschnitt des Sitzkissens **(2)** integriert gelagert ist.

2. Kraftfahrzeug nach Anspruch 1, **dadurch gekennzeichnet, dass** die Rollobahn **(10)** über mindestens eine Umlenkrolle geführt ist, die im Bereich einer in Fahrtrichtung gesehen vorderen Stirnseite **(12)** des Sitzkissens **(2)** angeordnet ist.

3. Kraftfahrzeug nach einem der vorhergehenden Ansprüche, **dadurch gekennzeichnet, dass** an dem freien Ende der Rollobahn **(10)** ein starrer Zugspriegel **(16)** angebracht ist.

4. Kraftfahrzeug nach einem der vorhergehenden Ansprüche, **dadurch gekennzeichnet, dass** die Rollobahn **(10)** gegen Federkraft von der Wickelwelle **(9)** abrollbar ist.

5. Kraftfahrzeug mit einem ersten Schutzrollo, insbesondere nach einem der vorhergehenden Ansprüche, das in der Wirkstellung zumindest im wesentlichen zwischen einer Dachinnenverkleidung und dem vorderen Bereich eines Sitzkissens oder einer nach vorne umgeklappten Rückenlehne verläuft, **dadurch gekennzeichnet, dass** ein weiteres Schutzrollo vorgesehen ist, dessen Rollobahn **(19)** unabhängig von der Rollobahn **(10)** des ersten Schutzrollos aus einer um eine drehbare Wickelwelle **(20)** aufgerollten Aufbewahrungslage in eine zumindest annähernd lotrecht verlaufende Wirkstellung zumindest zwischen einer sich in Gebrauchsstellung befindenden Rückenlehne **(3)** des Fahrzeugsitzes **(1)** und der Dachinnenverkleidung **(15)** verlagerbar ist.

6. Kraftfahrzeug nach Anspruch 5, **dadurch gekennzeichnet, dass** die Wickelwelle **(20)** des weiteren Schutzrollos oberhalb oder in der Dachinnenverkleidung **(15)** gelagert ist.

7. Kraftfahrzeug nach Anspruch 6, **dadurch gekennzeichnet, dass** das freie Ende **(21)** der Rollobahn **(20)** des weiteren Schutzrollos sich in der Wirkstellung in einem lösbaren Eingriff mit einer Befestigungseinrichtung **(24)** im oberen Bereich der Rückseite **(6)** einer sich in Gebrauchsstellung befindenden Rückenlehne **(3)** des Fahrzeugsitzes **(1)** befindet.

8. Kraftfahrzeug nach einem der vorhergehenden Ansprüche, **dadurch gekennzeichnet, dass** zumindest eine der Rollobahnen **(10,19)** aus einem Gewirke mit Löchern in regelmäßigen Abständen besteht.

9. Kraftfahrzeug nach einem der vorhergehenden Ansprüche, **dadurch gekennzeichnet, dass** zumindest eine der Rollobahnen **(10, 19)** ein Netz ist.
